# EUROPEAN PATENT APPLICATION

(11) **EP 1 622 132 A2**
(43) Date of publication of application: **01.02.2006**
(21) Application number: 05105824.6
(22) Date of filing: 29.06.2005
(51) Int. Cl.: G11B 7/007

(54) **Optical disk and information playback apparatus**

(30) Priority: 28.07.2004 JP 2004220741
(71) Applicant: Kabushi Kaisha Toshiba, Tokyo 105-8001 (JP)
(72) Inventor: Ootera, Yasuaki, 105-8001, Tokyo (JP)
(74) Representative: Henkel, Feiler & Hänzel

(57) **Abstract**

In an example of the present invention, an optical disk includes groove tracks (GT) and land tracks (LT) which are alternately arranged in the radial direction of the disk. A track width (G) of each of the groove tracks is set at 60% to 70% of a track pitch (T) indicating the distance between the midpoints of the track widths of the two groove tracks which sandwich the land track.

## Description

The present invention relates to, e.g., a WORM optical disk, and to an information playback apparatus which plays back information recorded on such a WORM optical disk.

In recent years, various optical disks have been introduced, and research and development of such optical disks have been actively conducted. For example, in Jpn. Pat. Appln. KOKAI Publication No. 2004-5869, a WORM optical disk is disclosed. A groove track is formed on the substrate surface of the WORM optical disk. A track pitch is set at 0.73 to 0.75 µm, the depth of the groove track is set at 1,500 to 1,700Å, and the track width of the groove track is set at 0.18 to 0.27 µm.

In the WORM optical disk disclosed in Jpn. Pat. Appln. KOKAI Publication No. 2004-5869, the track width of the groove track is defined to be small (the proportion is 0.24 to 0.37 of the track pitch) such that signals from land prepits do not impose any influence on playback of data recorded in the groove track.

However, there is a problem of decreasing reflectance when the track width of the groove track decreases. More particularly, in a Low-to-High medium which has low reflectance before recording, it becomes harder to read an address upon further reduction in the reflectance.

It is an object of the present invention to provide an optical disk capable of high-quality information recording. It is another object of the present invention to provide an information playback apparatus which can play back an optical disk capable of high-quality information recording.

According to an aspect of the present invention, there is provided an optical disk comprising a plurality of groove tracks and a plurality of land tracks alternately arranged in a radial direction of the disk, wherein a track width of each of the groove tracks is set at 60% to 70% of a track pitch indicating a distance between midpoints of the track widths of the two groove tracks which sandwich a corresponding one of the land tracks.

According to an aspect of the present invention, there is provided an information playback apparatus, comprising an irradiation unit configured to apply a light beam to an optical disk which includes a plurality of groove tracks and a plurality of land tracks alternately arranged in a radial direction of the disk and in which a track width of each of the groove tracks is set at 60% to 70% of a track pitch indicating a distance between midpoints of the track widths of the two groove tracks which sandwich a corresponding one of the land tracks, a detection unit configured to detect reflected light from the optical disk, and a playback unit configured to play back the information recorded on the optical disk on the basis of the reflected light detected by the detection unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a sectional view of a WORM optical disk according to an example of the present invention;
FIG. 2 is a view showing the flow of a manufacturing method of the WORM optical disk according to the example of the present invention;
FIG. 3 is a view showing the structure of a groove in the WORM optical disk according to the example of the present invention;
FIG. 4 is a view showing a first example of the depth and width of a groove track in the optical disk according to the present invention;
FIG. 5 is a view showing a second example of the depth and width of the groove track in the optical disk according to the present invention;
FIG. 6 is a view showing a third example of the depth and width of the groove track in the optical disk according to the present invention; and
FIG. 7 is a block diagram showing a schematic arrangement of an optical disk apparatus (information recording/playback apparatus) according to the example of the present invention.

An embodiment will be described below with reference to the accompanying drawing.

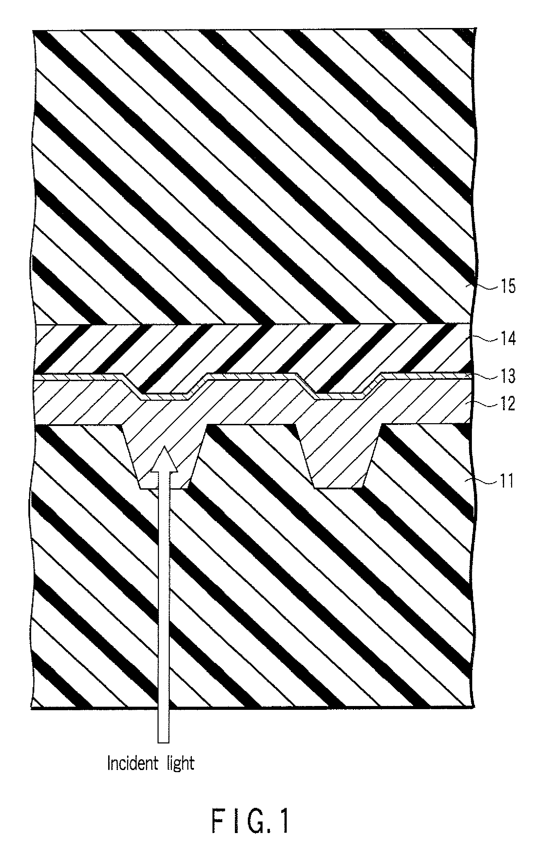

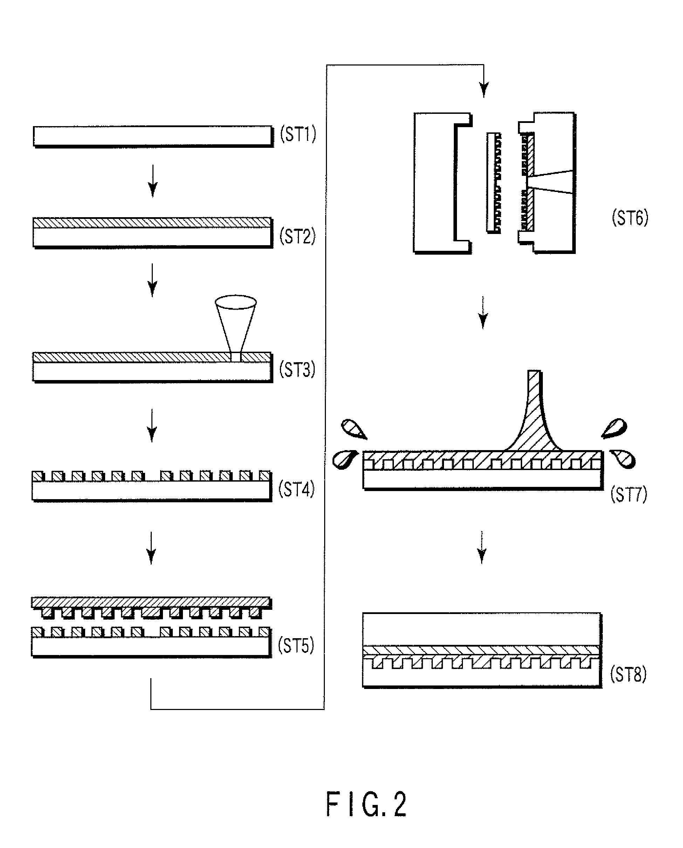

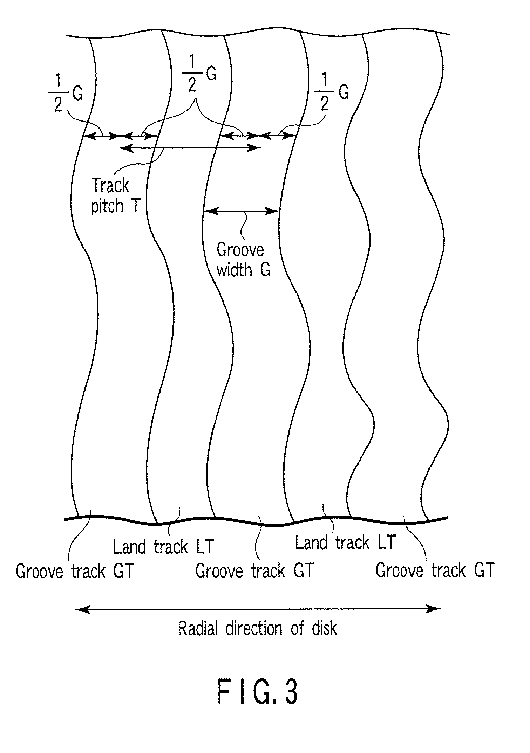

FIG. 1 is a sectional view of a WORM optical disk according to an example of the present invention. FIG. 2 is a view showing the flow of a manufacturing method of the WORM optical disk according to the example of the present invention. FIG. 3 is a view showing the structure of a groove in the WORM optical disk according to the example of the present invention.

As shown in FIG. 1, the WORM optical disk includes a molded substrate 11 which is positioned on a light beam incident surface side, a molded substrate 15 which is positioned on the opposite side to the light beam incident surface side, a recording layer 12 which is arranged between the molded substrates 11 and 15 and undergoes a change in properties when irradiated with a laser beam, a reflecting layer 13 which is arranged between the recording layer 12 and the molded substrate 15, and an adhesive layer 14 which is arranged between the reflecting layer 13 and the molded substrate 15.

The molded substrate 11 on the light incident side has a tracking groove and a prepit in which disk information and the like are recorded. This groove forms a so-called groove track. Accordingly, the groove tracks and land tracks are alternately arranged in the radial direction of the disk.

The recording layer 12 is arranged in the groove of the molded substrate 11. This recording layer 12 is a layer using an organic dye which undergoes a change in properties when irradiated with light. A peripheral groove is deformed by this change in properties to form a mark, and record the information. A diazo organic dye material, cyanine organic dye material, styryl organic dye material, or phthalocyanine organic dye material, or a mixture thereof is used in the recording layer 12. On the recording layer 12, for example, the reflecting layer 13 made of Al or Ag is formed by sputtering or the like. One optical disk is formed by adhering the above-described molded substrate 11 and the other molded substrate 15 by means of the adhesive layer 14.

In this embodiment, assume that a disk has a diameter of 120 mm and a thickness of 1.2 mm (adhering two polycarbonate molded substrates each having a thickness of 0.6 mm), and this disk serves as the WORM optical disk. Of course, the disk of the present invention is not limited to these numerical values. For example, as recording/playback light applied to the disk in this embodiment, recording/playback light having a wavelength of 400 nm is used. As an optical objective lens which processes this recording/playback light, a lens having an NA of 0.65 is used. Also, in the disk according to this embodiment, a track pitch between the grooves becomes 400 nm. However, the disk of the present invention is not limited to these numerical values. Note that the track pitch indicates the distance between the midpoints of the track widths of two groove tracks which sandwich the land track.

The manufacturing method of the above WORM optical disk will be described below with reference to FIG. 2. A master is made of glass, and has a surface which is polished and cleaned (ST1). A photoresist is applied to the surface of the master (ST2), and the photoresist surface is exposed to a laser beam and the like to record information (ST3).

Next, the exposed master is developed to form convex and concave portions such as the pits and groove (ST4). After that, the master is plated, and then a stamper (generally made of nickel) is formed (SE5). By using the stamper as a mold, the molded substrate 11 made of a resin (generally polycarbonate) is formed by injection molding (ST6).

The organic dye is applied by spin coating as the recording layer 12 on the above-described molded substrate 11 (ST7). The reflecting layer 13 is formed on the recording layer 12 of the organic dye. The molded substrate 15 is then prepared. The reflecting layer 13 and the molded substrate 15 are adhered by means of the adhesive layer 14. With this operation, the WORM optical disk is completely formed (ST8).

The recording principle of the WORM optical disk using the organic dye will be described below. For example, a recording laser beam having a wavelength of 400 nm is applied to the organic dye filled in the groove of the molded substrate. The refractive index of the organic dye which initiates a chemical reaction is changed, and the adjacent molded substrate is deformed by reaction heat of the organic dye to form a recording mark. This is the recording principle of the general WORM optical disk. In this case, in accordance with the refractive index and film thickness of the organic dye and the depth of the groove, a High-to-Low (H-L) recording layer in which the reflectance changes from high to low before and after recording, and a Low-to-High (L-H) recording layer in which the reflectance changes from low to high before and after recording can be discriminatively formed.

In this embodiment, for example, the L-H medium is used as a target. The dye composed of the recording layer of the L-H medium has been proposed in Jpn. Pat. Appln. KOKAI Publication Nos. 2002-74740 and 2002-206061.

Alternatively, the recording layer may be made of an inorganic material in place of the organic dye. In this case, recording is performed by changing the phase from amorphous to crystalline and vice versa, by the heat of a recording laser beam. When using the inorganic material, the H-L recording layer in which the reflectance changes from high to low before and after recording, and the L-H recording layer in which the reflectance changes from low to high before and after recording can also be discriminatively formed.

The relationship between the track width of the groove track and recording characteristics of the disk will be described below. FIG. 3 is a view showing a schematic structure of groove tracks GT and land tracks LT which are alternately arranged in the radial direction of the disk. Note that the recording mark is formed inside the groove track GT. The groove track GT is a track wobbled in correspondence with playback control information (e.g., address information).

In the conventional WORM optical disk (H-L), when the width of the groove track is decreased to form the recording mark inside the narrow track, the influence of an adjacent crosstalk can be reduced. Accordingly, good characteristics can be obtained.

However, in the optical disk of the present invention, i.e., in the L-H medium, the reflectance before recording is extremely low. In order to read the address information, the reflectance is required to be as high as possible. Hence, the groove width is increased to obtain higher reflectance, thereby easily reading the address information from the wobble of the groove track GT. When increasing the track width of the groove track GT, the reflectance (reflectance at high level) of the recording mark also increases, thereby improving the recording signal quality. However, since the width of the recording mark is increased in accordance with an increase in the track width, an adjacent crosstalk is also increased. Therefore, the optimal value of the track width is set.

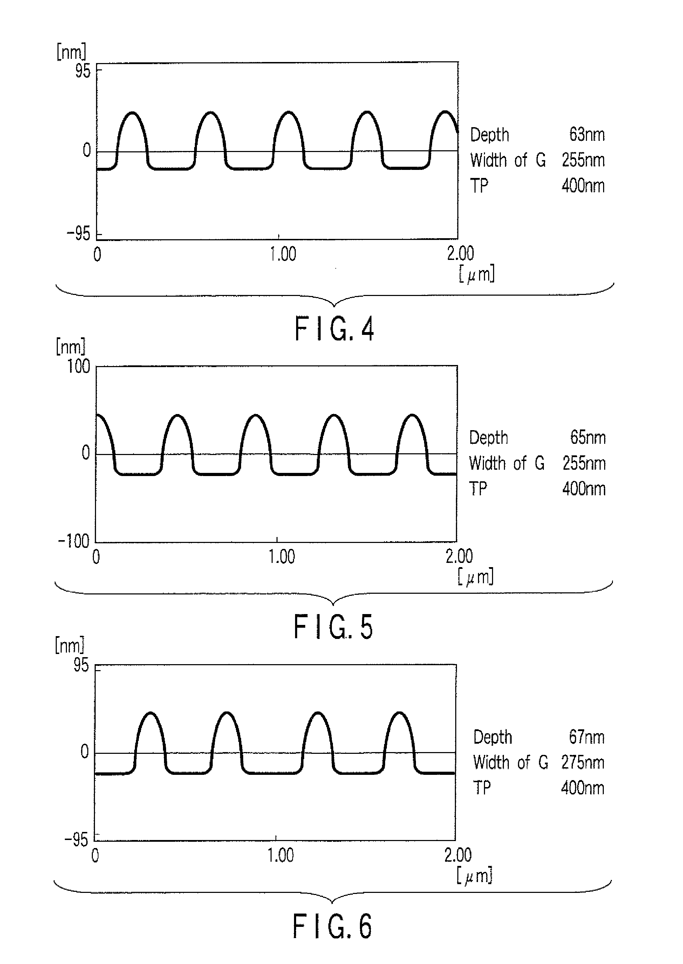

Assume that reference symbol T denotes a track pitch (400 nm in this embodiment), and reference symbol G denotes the track width of the groove track GT. In the optical disk of the present invention, the depth of the groove track GT is set at 50 to 80 nm (preferably set at 60 to 70 nm), and track width G = track pitch T × (0.6 to 0.7). That is, the track width G of each groove track GT is 60% to 70% of the track pitch indicating the distance between the midpoints of the track widths of two groove tracks GT which sandwich the land track LT. More specifically, as shown in FIG. 4, in the optical disk of the present invention, the depth of the groove track GT is set at 63 nm, and the track width G is set at 255 nm. As shown in FIG. 5, in the optical disk of the present invention, for example, the depth of the groove track GT may be set at 65 nm, and the track width G may be set at 255 nm. As shown in FIG. 6, in the optical disk of the present invention, for example, the depth of the groove track GT may be set at 67 nm, and the track width G may be set at 275 nm.

With this arrangement, the reflectance (reflectance at high level) of the recording mark on the optical disk of the present invention becomes 18% or more. Accordingly, the error rate of the signal read from the optical disk of the present invention can be reduced. That is, a decrease in the quality of the signal read from the optical disk of the present invention can be prevented.

Note that when the track width G of the groove track GT is set at about 0.45 of the track pitch T, the reflectance (reflectance at high level) of the recording mark is decreased to about 16.1%.

When increasing the proportion of the track width of the groove track GT to the track pitch (i.e., when increasing the track width), of course, the land track LT relatively becomes narrow. Hence, the playback control information such as address information is preferably recorded upon reflection on the wobble of the groove track GT in place of the land prepit or the like.

As described above, in the L-H medium in which the reflectance of the recording mark becomes higher than that of an unrecorded portion, when the track width of the groove track GT is 0.6 to 0.7 of the track pitch, the error rate is minimum, thus improving the signal quality. This is because the track width of the groove track GT is optimized to attain a proper balance between the reflectance and the width of the mark. The reflectance (reflectance at high level) of the recording mark is ensured to be 18% or more. This also contributes to an improvement in the signal quality. Also, since the playback control information such as the address information is recorded upon reflection on the wobble of the groove track GT, a problem (the land prepit is not preferably formed) posed by increasing the track width of the groove track GT and relatively decreasing the track width of the land track LT can be avoided.

The optical disk structure of the present invention can be applied to both the WORM optical disks using the organic material and inorganic material.

Also, the optical disk structure of the present invention can be applied to a single-sided/two-layered WORM optical disk, and a cover-layered disk such as a Blu-Ray disk. Note that in this case, the above-described groove track GT indicates a track on the side of the recording mark to be formed (the track width of the convex land track LT can be increased in place of that of the groove track GT).

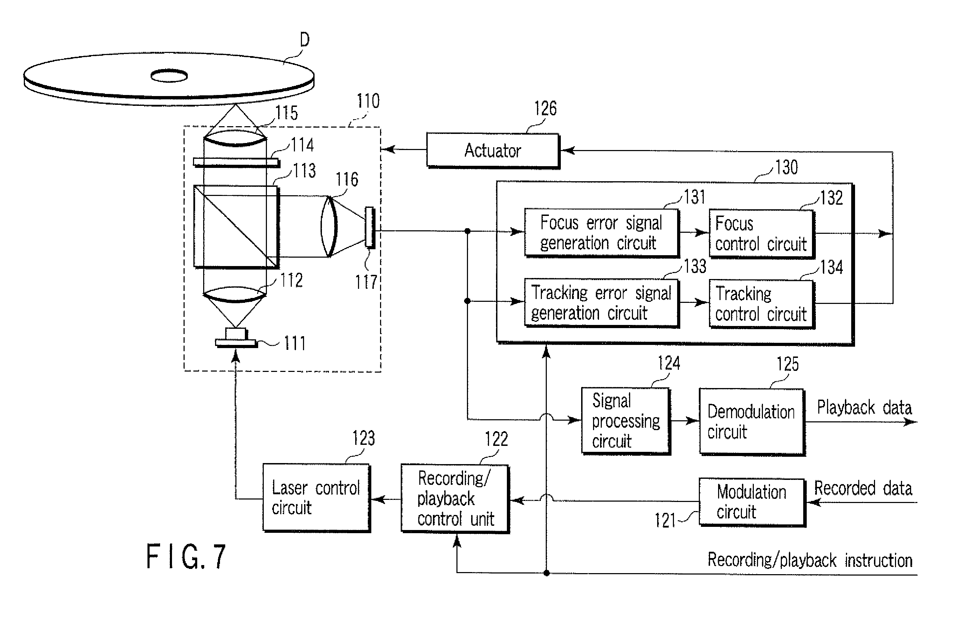

Referring to FIG. 7, an information recording/playback apparatus which causes the laser beam to apply to the above-described optical disk records the information on these optical disks, and plays back the information recorded on the optical disks will be described below. FIG. 7 is a block diagram showing a schematic arrangement of the optical disk apparatus (information recording/playback apparatus) according to an example of the present invention.

As shown in FIG. 7, the optical disk apparatus includes an optical pickup 110, modulation circuit 121, recording/playback control unit 122, laser control circuit 123, signal processing circuit 124, demodulation circuit 125, actuator 126, and focus tracking control unit 130.

The optical pickup 110 also includes a laser 111, collimator lens 112, polarization beam splitter (to be referred to as a PBS hereinafter) 113, quarter wavelength plate 114, objective lens 115, focus lens 116, and photodetector 117.

The focus tracking control unit 130 also includes a focus error signal generation circuit 131, focus control circuit 132, tracking error signal generation circuit 133, and tracking control circuit 134.

The operation of recording the information on an optical disk D in this optical disk apparatus will be described below. The modulation circuit 121 modulates recorded information (data symbols) from a host in accordance with a predetermined modulation method into a channel bit sequence. The channel bit sequence corresponding to the recorded information is input to the recording/playback control unit 122. Also, a recording/playback instruction (in this case, recording instruction) is output from the host to this recording/playback control unit 122. The recording/playback control unit 122 outputs a control signal to the actuator 126, and drives an optical pickup such that the light beam is appropriately focused on a target recording position. The recording/playback control unit 122 also supplies the channel bit sequence to the laser control circuit 123. The laser control circuit 123 converts the channel bit sequence into a laser driving waveform, and drives the laser 111. That is, the laser control circuit 123 pulse-drives the laser 111. In accordance with this operation, the laser 111 emits the recording light beam corresponding to the desired bit sequence.

The recording light beam emitted from the laser 111 is made into parallel light by the collimator lens 112, and enters and passes through the PBS 113. The beam passing through the PBS 113 then passes through the quarter wavelength plate 114, and is focused on the information recording surface of the optical disk D by the objective lens 115. The focused recording light beam is maintained in an optimal microspot on the recording surface (recording layer 12 or 15) by focus control performed by the focus control circuit 132 and actuator 126, and the tracking control performed by the tracking control circuit 134 and actuator 126.

The operation of playing back the data from the optical disk D in this optical disk apparatus will be described below. A recording/playback instruction (in this case, a playback instruction) is output from the host to the recording/playback control unit 122. The recording/playback control unit 122 outputs a playback control signal to the laser control circuit 123 in accordance with the playback instruction from the host. The laser control circuit 123 drives the laser 111 based on the playback control signal. In accordance with this operation, the laser 111 emits the playback light beam.

The playback light beam emitted from the laser 111 is made into parallel light by the collimator lens 112, and enters and passes through the PBS 113. The light beam passing through the PBS 113 then passes through the quarter wavelength plate 114, and is focused on the information recording surface (e.g., groove track GT) of the optical disk D by the objective lens 115. The focused playback light beam is maintained in an optimal microspot on the recording surface by focus control performed by the focus control circuit 132 and actuator 126, and the tracking control performed by the tracking control circuit 134 and actuator 126. In this case, the playback light beam emitted on the optical disk D is reflected by the reflecting layer. Reflected light passes through the objective lens 115 in the opposite direction, and becomes parallel light again. The reflected light then passes through the quarter wavelength plate 114, is vertically polarized with respect to the incident light, and is reflected by the PBS 113. The beam reflected by the PBS 113 is made into convergent light by the focus lens 116, and enters the photodetector 117. The photodetector 117 has, e.g., four photodetectors. The light beam which becomes incident on the photodetector 117 is photoelectrically converted into an electrical signal and amplified. The amplified signal is equalized and binarized by the signal processing circuit 124 and sent to the demodulation circuit 125. The demodulation circuit 125 executes a demodulation operation corresponding to a predetermined modulation method and outputs playback data.

With this operation, the playback control information reflected on the wobble of the groove track GT of the optical disk is read. Also, by the reflectance of the groove track GT, the recording mark on the groove track GT of the optical disk is read on the basis of the fact that the information is recorded in accordance with the recording characteristics (L-H) for increasing the reflectance of the recording mark on the groove track GT.

On the basis of part of the electrical signal output from the photodetector 117, the focus error signal generation circuit 131 generates a focus error signal. Similarly, on the basis of part of the electrical signal output from the photodetector 117, the tracking error signal generation circuit 133 generates a tracking error signal. The focus control circuit 132 controls the actuator 128 and the focus of the beam spot on the basis of the focus error signal. The tracking control circuit 134 controls the actuator 128 and the tracking of the beam spot on the basis of the tracking error signal.

## Claims

1. An optical disk capable of recording information, **characterized by** comprising
a plurality of groove tracks (GT) and a plurality of land tracks (LT) alternately arranged in a radial direction of the disk,
wherein a track width (G) of each of the groove tracks is set at 60% to 70% of a track pitch (T) indicating a distance between midpoints of the track widths of the two groove tracks which sandwich a corresponding one of the land tracks.

2. A disk according to claim 1, **characterized in that** a depth of the groove track is set at 50 to 80 nm.

3. A disk according to claim 1, **characterized in that** the track pitch is set at 400 nm.

4. A disk according to claim 1, **characterized in that** the groove track is a track wobbled in correspondence with control information.

5. A disk according to claim 1, **characterized in that** the information is configured to be recorded in accordance with recording characteristics for increasing reflectance of a recording mark on the groove track, based on reflectance of the groove track.

6. A disk according to claim 1, **characterized in that** the reflectance of the recording mark on the groove track is set to be not less than 18%.

7. An information playback apparatus which plays back information recorded on an optical disk, **characterized by** comprising
an irradiation unit (123, 110) configured to apply a light beam to an optical disk which includes a plurality of groove tracks and a plurality of land tracks alternately arranged in a radial direction of the disk and in which a track width of each of the groove tracks is set at 60% to 70% of a track pitch indicating a distance between midpoints of the track widths of the two groove tracks which sandwich a corresponding one of the land tracks,
a detection unit (110) configured to detect reflected light from the optical disk, and
a playback unit (124, 125) configured to play back the information recorded on the optical disk on the basis of the reflected light detected by the detection unit.

8. An apparatus according to claim 7, **characterized in that** the playback unit plays back the information recorded on the optical disk on the basis of a fact that the information is recorded in accordance with recording characteristics for increasing reflectance of a recording mark on the groove track, based on reflectance of the groove track.

9. An apparatus according to claim 7, **characterized in that** the playback unit plays back control information reflected on a wobble of the groove track.
